# EUROPÄISCHE PATENTSCHRIFT

(11) **EP 3 431 223 B1**
(45) Veröffentlichungstag und Bekanntmachung des Hinweises auf die Patenterteilung: **22.01.2020**
(21) Anmeldenummer: 18181327.0
(22) Anmeldetag: 03.07.2018
(51) Int. Cl.: B23Q 7/04, B23Q 3/155

(54) **VERFAHREN ZUR BEARBEITUNG VON WERKSTÜCKEN UND WERKZEUGMASCHINE ZUR DURCHFÜHRUNG DES VERFAHRENS**
METHOD FOR THE PREPARATION OF WORKPIECES AND MACHINE TOOL FOR CARRYING OUT THE METHOD
PROCÉDÉ D'USINAGE DES PIÈCES À USINER ET MACHINE-OUTIL DESTINÉE À LA MISE EN OEUVRE DUDIT PROCÉDÉ

(30) Priorität: 13.07.2017 DE 102017115734
(43) Veröffentlichungstag der Anmeldung: 23.01.2019
(73) Patentinhaber: STAMA Maschinenfabrik GmbH, 73278 Schlierbach (DE)
(72) Erfinder: GÜNTHER, Kai, 73728 Esslingen (DE); BOEHM, Thomas, 73054 Eislingen (DE); MUELLER, Frank, 70188 Stuttgart (DE)
(74) Vertreter: Witte, Weller & Partner Patentanwälte mbB

(56) Entgegenhaltungen:
- DE-A1- 4 228 708
- DE-A1- 10 005 338
- DE-C2- 3 620 343

## Beschreibung

Die vorliegende Erfindung betrifft eine Werkzeugmaschine mit einer Spannvorrichtung zum Einspannen von zu bearbeitenden Werkstücken, mit einer relativ zu der Spannvorrichtung verfahrbaren Arbeitsspindel, und einem Werkzeugmagazin, in dem Werkzeuge für die Bearbeitung der Werkstücke vorrätig gehalten werden, wobei die Werkzeuge wahlweise in die Arbeitsspindel einspannbar sind.

Die vorliegende Erfindung betrifft ferner ein Verfahren zum Bearbeiten von Werkstücken auf derartigen Werkzeugmaschinen, mit den Schritten:
a) Einspannen eines Werkstückes in die Spannvorrichtung derart, dass zumindest ein zu bearbeitender Werkstückabschnitt des Werkstückes über die Spannvorrichtung übersteht,
b) Bearbeiten des Werkstückabschnittes mit zumindest einem in die Arbeitsspindel eingespannten Werkzeug,
c) Abtrennen des bearbeiteten Werkstückabschnitts von dem in der Spannvorrichtung verbleibenden restlichen Werkstück, und
f) Entsorgen des in der Spannvorrichtung verbleibenden restlichen Werkstücks als Reststück.

Derartige Werkzeugmaschinen sind beispielsweise aus der WO 98/08648 A1 oder der DE 42 28 708 A1 bekannt. Auf den bekannten Werkzeugmaschinen wird das bekannte Verfahren durchgeführt.

Derartige Werkzeugmaschinen werden zur Serienbearbeitung von Werkstücken eingesetzt, die beispielsweise als Rohlinge nacheinander einzeln in die Spannvorrichtung eingespannt und bearbeitet werden. In dieser Einspannung kann zwar der über die Spannvorrichtung überstehende Werkstückabschnitt allseits bearbeitet werden, eine Bearbeitung des restlichen Werkstücks, das in die Spannvorrichtung eingespannt ist, ist so jedoch nicht möglich.

Das teilbearbeitete Werkstück wird daher aus der Spannvorrichtung entnommen und entweder in dieselbe oder in eine weitere Spannvorrichtung eingespannt, so dass das restliche Werkstück bearbeitet werden kann.

Es ist auch bekannt, dass das teilbearbeitete Werkstück von dem restlichen Werkstück abgetrennt und in eine andere Spannvorrichtung eingespannt wird, so dass es an seiner von dem restlichen Werkstück abgetrennten Seite bearbeitet werden kann.

Dieses Verfahren wird beispielswiese dann verwendet, wenn zum Einspannen des Werkstückes in die Spannvorrichtung das einzuspannende restliche Werkstück eine spezielle Außenkontur aufweisen muss. Das in der Spannvorrichtung nach dem Abtrennen des teilbearbeiteten Werkstückes verbleibende restliche Werkstück wird als Reststück entsorgt.

Dieses Verfahren wird jedoch insbesondere dann angewendet, wenn mehrere Werkstücke nacheinander von einer Werkstückstange abgearbeitet werden.

An oder in der Nähe einer zur Durchführung dieses Verfahrens ausgerüsteten Werkzeugmaschine, wie sie aus der eingangs genannten WO 98/08648 A1 oder der DE 42 28 708 A1 bekannt ist, ist ein Magazin für Werkstückstangen oder Stangenabschnitten vorgesehen, die der Reihe nach in eine Spannvorrichtung eingeschoben werden. Jede Werkstückstange wird so weit in die Spannvorrichtung eingeschoben, dass sie im Bereich des Arbeitsraumes der Werkzeugmaschine über die Spannvorrichtung zumindest mit einem Abschnitt vorsteht, der ganz oder z.T. dem zu fertigenden Werkstück entspricht.

Mit Hilfe von in die Arbeitsspindel einspannbaren Werkzeugen wird der einem zu fertigenden Werkstück entsprechende Abschnitt - im Folgenden auch Werkstückabschnitt - bearbeitet. Hierzu können die Werkstückstange und/oder die Arbeitsspindel geschwenkt werden, um auch die Stirnseite des Werkstückabschnittes bearbeiten zu können und beispielsweise schräge Bohrungen anzubringen.

Sobald sämtliche Bearbeitungsvorgänge an dem Werkstückabschnitt vorgenommen wurden, wird dieser Werkstückabschnitt von der Werkstückstange abgetrennt und beispielsweise über eine Rutsche in einen Auffangbehälter geleitet. In anderen Fällen wird der Werkstückabschnitt vor dem Abtrennen von der Werkstückstange mit einer in Längsrichtung der Werkstückstange verfahrbaren Vorrichtung ergriffen, in der der Werkstückabschnitt nach dem Abtrennen verbleibt, so dass er auch an seiner jetzt von dem restlichen Werkstück, also der restlichen Werkstückstange abgetrennten Seite noch bearbeitet werden kann.

In vielen Fällen ist ein Handhabungssystem vorgesehen, mit dem die fertig gestellten Werkstücke, also die Fertigteile, definiert auf einer Palette abgelegt werden.

Der Vorschub der in der Spannvorrichtung befindlichen Werkstückstange erfolgt in geeigneter Weise von hinten durch die Spannvorrichtung hindurch, beispielsweise durch eine Kolben-Zylindereinheit, die in Anlage mit dem hinteren Ende der Werkstückstange ist. Es sind aber auch Transportsysteme denkbar, die die Stange an ihrem hinteren oder vorderen Ende ergreifen und definiert durch die Spannvorrichtung schieben bzw. ziehen.

Bedingt durch die endliche Länge der Spannvorrichtung kann die Werkstückstange nur so lange auf diese Weise durch die Spannvorrichtung hindurchgeschoben und ein neues Werkstück bearbeitet werden, bis eine restliche Werkstückstange verbleibt, die nicht mehr so lang ist, dass sie einerseits sicher eingespannt werden kann, und andererseits noch mit einem Werkstückabschnitt ausreichender Länge aus der Spannvorrichtung vorsteht.

Diese restliche Werkstückstange muss dann als Reststück entsorgt werden, was immer wieder zu Problemen führt. Da die Werkstückstangen häufig aus wertvollem Material bestehen, muss zudem dafür gesorgt werden, dass die Reststücke auf einfache und kostengünstige Weise einer Wiederverwertung zugeführt werden können.

In dem Fall, in dem die Fertigteile über eine Rutsche weitergeleitet werden, können sich die ggf. erheblich längeren Reststücke auf der Rutsche verkeilen, so dass der Bearbeitungsprozess unterbrochen werden muss. Außerdem müssten die Reststücke nachträglich von den Fertigteilen separiert werden, was zusätzliche Arbeitsschritte erfordert.

Es ist auch problematisch, wenn die Reststücke zusammen mit den Spänen entsorgt werden, denn die Reststücke können sich im Späneförderer verklemmen, was ebenfalls zu einem Stillstand der Werkzeugmaschine führt. Außerdem müssten die Reststücke nachträglich von den Spänen separiert und gereinigt werden, was zusätzliche Arbeitsschritte erfordert.

Die Entsorgung der Reststücke ist auch bei solchen Werkzeugmaschinen problematisch, die ein Handhabungssystem für die Fertigteile besitzen, diese also mit einem Greifer erfassen und definiert beispielsweise auf einer Palette ablegen. Wenn die Reststücke nicht nachträglich aus den Fertigteilen herausgesucht werden sollen, muss für sie ein gesonderter Ablageraum vorgesehen werden, was komplexe Handhabungssysteme erfordert. Außerdem haben die Fertigteile i.d.R. andere Geometrien als die Reststücke, so dass diese mit dem Greifer für die Fertigteile nicht oder nicht sicher ergriffen werden können.

Das DE 203 06 220 U1 beschreibt eine Werkzeugmaschine der eingangs genannten Art, bei der ein Werkstück-Transportsystem mit einem Schlitten zum Zuführen von Rohlingen und zum Abtransport von Fertigteilen dient, die Handhabung von Reststücken wird nicht erwähnt.

Die Fertigteile werden in der bekannten Werkzeugmaschine mit einem in die Werkzeugaufnahme der Arbeitsspindel einsetzbaren Spindelgreifer aus der Spannvorrichtung entnommen und auf dem Schlitten abgesetzt, woraufhin dann ein Rohling von demselben Schlitten entnommen und in die Spannvorrichtung eingesetzt wird.

Für den Spindelgreifer ist an dem Schlitten eine Aufnahmehalterung angeordnet, aus der die Arbeitsspindel den Spindelgreifer im Pick-up-Verfahren entnimmt. Der Spindelgreifer weist zwei Greifarme auf, die mittels einer hydraulischen, elektrischen oder pneumatischen Versorgungsleitung betätigt werden, die hier mit dem Schlitten verbunden ist.

Spindelgreifer sind beispielsweise auch aus der DE 3620343 C2 oder der DE 19916765 A1 bekannt. Darunter versteht man Werkstückgreifer, die zur Aufnahme in die Werkzeugaufnahme einer Arbeitsspindel ausgebildet sind. Die zum Transportieren des Werkstücks notwendige Verfahrbewegung wird dann durch die Arbeitsspindel realisiert.

Soll ein Werkstück transportiert oder umgesetzt werden, so wird der Spindelgreifer aus einem Werkzeugmagazin oder einem speziellen Greifermagazin in der Maschine in die Arbeitsspindel eingewechselt, und zwar entweder im sogenannten Pick-up-Verfahren oder durch einen speziellen Greiferarm.

Um die Aufnahmekapazität des Werkzeugmagazins nicht zu sehr einzuschränken, wird gemäß der DE 3620343 C2 ein spezielles Greifermagazin innerhalb des Arbeitsbereichs der Werkzeugspindel vorgesehen, was infolge des großen Platzbedarfs bei der bekannten Werkzeugmaschine jedoch zu einer Einschränkung des Arbeitsraumes führt.

Dagegen schlägt die DE 19916765 A1 einen einklappbarer Spindelgreifer vor, der im eingeklappten Zustand platzsparend im Werkzeugmagazin abgelegt werden kann, wozu jedoch ein großer technischer Aufwand erforderlich ist, der zu hohen Kosten führt.

Die EP 1 743 736 A2 beschreibt ebenfalls eine Werkzeugmaschine der eingangs genannten Art, bei der ein Werkstückgreifer fest außen an dem Spindelkopf angeordnet ist, d.h. er wird nicht aus dem Arbeitsraum herausgefahren und auch nicht in die Werkzeugaufnahme der Arbeitsspindel eingesetzt.

Vor diesem Hintergrund liegt der vorliegenden Erfindung die Aufgabe zugrunde, das bekannte Verfahren sowie die bekannte Werkzeugmaschine derart weiterzubilden, dass bei konstruktiv einfachem Aufbau ein sicherer und schneller Betrieb der Werkzeugmaschine möglich ist.

Bei dem eingangs genannten Verfahren wird diese Aufgabe erfindungsgemäß dadurch gelöst, dass Schritt f) die folgenden Schritte umfasst:
g) Einspannen eines in seiner Greifstellung selbsthaltenden Spindelgreifers in die Arbeitsspindel,
h) Verfahren der Arbeitsspindel derart, dass der Spindelgreifer das Reststück ergreifen kann,
i) Ergreifen des Reststückes mit dem Spindelgreifer,
k) Freigegeben des Reststückes aus der Spannvorrichtung, und
l) Verfahren der Arbeitsspindel und Ablegen des das Reststück haltenden Spindelgreifers zum nachfolgenden Entsorgen des Reststückes,

wobei vorzugsweise die Arbeitsspindel in Schritt g) den Spindelgreifer an einer Übergabeposition aus dem Werkzeugmagazin übernimmt, und in Schritt l) der das Reststück haltende Spindelgreifer an der Übergabeposition in das Werkzeugmagazin zurückgelegt wird.

Weiter vorzugsweise ist das Werkstück eine Werkstückstange, wobei zwischen den Schritten c) und f) die folgenden Schritte durchgeführt werden:
d) Vorschieben der restlichen Werkstückstange, bis zumindest ein neuer Werkstückabschnitt über die Spannvorrichtung übersteht, und erneutes Einspannen der restlichen Werkstückstange, und
e) Wiederholen der Schritte b) bis d), bis eine für die weitere Bearbeitung ungeeignete restliche Werkstückstückstange entsteht, die dann in Schritt f) als Reststück entsorgt wird.

Bei der eingangs genannten Werkzeugmaschine wird diese Aufgabe erfindungsgemäß dadurch gelöst, dass in dem Werkzeugmagazin ein wahlweise in die Arbeitsspindel einspannbarer, in seiner Greifstellung selbsthaltender Spindelgreifer vorrätig gehalten wird, der zwischen einer Übergabeposition zu der Arbeitsspindel und einer Entladestation verfahrbar ist, in der der Spindelgreifer ein aus der Spannvorrichtung aufgenommenes Reststück frei gibt.

Die Erfinder der vorliegenden Erfindung haben erkannt, dass das Reststück auf einfache Weise durch einen in seiner Greifstellung selbsthaltenden Spindelgreifer entsorgt werden kann, der von der Arbeitsspindel abgelegt werden kann, während er das Reststück noch hält.

Unter einem "selbsthaltenden" Spindelgreifer wird im Rahmen der vorliegenden Erfindung ein Spindelgreifer verstanden, der ein aufgenommenes Reststück auch dann verliersicher hält, wenn er von der Arbeitsspindel in das Werkzeugmagazin abgelegt und in dem Werkzeugmagazin verfahren wird. Der Spindelgreifer kann dazu beispielsweise eine Schließfeder, eine Schale, die bei Bedarf geeignet geöffnet wird, einen Verriegelungsmechanismus für Greiferbacken, ein selbstsperrendes oder selbsthemmendes Getriebe oder ähnlich geeignete Maßnahmen enthalten, die dafür sorgen, dass ein einmal von dem Spindelgreifer aufgenommenes Reststück nicht unwillkürlich wieder freigegeben wird.

Dies bietet zum einen Zeitvorteile, denn die Arbeitsspindel muss nicht zunächst zu einem Ablageort für das Reststück und dann zu einem Ablageort für den Spindelgreifer fahren, es reicht eine Fahrbewegung, um sowohl den Spindelgreifer als auch das Reststück abzulegen.

Die Erfindung bietet auch konstruktive Vorteile, denn in der Werkzeugmaschine müssen nicht zwei Ablageorte, einer für den Spindelgreifer und einer für das Reststück vorgesehen werden. Das reduziert auch den Platzbedarf im Verfahrbereich der Arbeitsspindel, also im Arbeitsraum.

Schließlich werden auch die eingangs erwähnten Probleme bei dem Reststückhandling beseitigt. Das Reststück wird sicher von dem abgelegten Spindelgreifer gehalten, der dann durch geeignete Mittel zu dem Ablageort für das Reststück bewegt wird, während die Arbeitsspindel nach Aufnahme eines neuen Werkzeuges aus dem Werkzeugmagazin bereits wieder zu der Spannvorrichtung fährt, um die Bearbeitung des nächsten Werkstücks zu beginnen,.

Besondere Vorteile ergeben sich, wenn der Spindelgreifer in dem Werkzeugmagazin gelagert wird, denn die Arbeitsspindel muss nach dem Ablegen eines Werkzeuges zur Aufnahme des Spindelgreifers bzw. nach dem Ablegen des das Reststück haltenden Spindelgreifers zum Aufnehmen eines neuen Werkzeuges nicht an eine völlig neue Position in dem Arbeitsraum fahren. Entweder fährt die Arbeitsspindel nach dem Ablegen von Werkzeug/Spindelgreifer an den nächsten Speicherplatz des Werkzeugmagazins, oder das Werkzeugmagazin schaltet um einen Speicherplatz weiter.

Diese Maßnahmen sorgen also für weitere Zeitvorteile und reduzieren auf konstruktiv einfache Weise den Platzbedarf noch weiter.

Die der Erfindung zugrunde liegende Aufgabe wird auf diese Weise vollkommen gelöst.

Das neue Verfahren und die neue Werkzeugmaschine können sowohl zur Bearbeitung von einzeln und nacheinander in die Spannvorrichtung eingespannten Rohlingen als auch zur Bearbeitung von Werkstücken von einer durch die Spannvorrichtung sukzessive durchgeschobenen Werkstückstange eingesetzt werden.

Das neue Verfahren kann auch auf bestehenden Werkzeugmaschinen durchgeführt werden, es muss lediglich ein selbsthaltender Spindelgreifer in dem Werkzeugmagazin vorgesehen und die Steuerung so ausgelegt werden, dass der ein Reststück haltende Spindelgreifer zu der Entladestation gefahren wird, während zeitlich parallel die Arbeitsspindel die Bearbeitung eines neuen Werkstücks aufnehmen kann.

Das kann beispielsweise durch eine Vorrichtung erfolgen, die den Spindelgreifer wieder aus dem Werkzeugmagazin entnimmt und zu der Entladestation fährt, wo ein Öffnungsmechanismus vorgesehen ist, der den selbsthaltenden Spindelgreifer öffnet, so dass er das Reststück abgibt. Danach verbringt die Vorrichtung den Spindelgreifer wieder in das Werkzeugmagazin.

Anderseits kann das auch durch das Werkzeugmagazin selbst erfolgen, das während der Zeitspanne für die aufeinanderfolgende Bearbeitung von Werkstücken lediglich ein neues Werkzeug in die Übergabeposition fahren muss, ansonsten aber nicht im Einsatz ist. Dazu ist es erforderlich, die Entladestation für die Reststücke in dem Werkzeugmagazin vorzusehen und den das Reststück haltenden Spindelgreifer an der üblichen Übergabeposition zwischen Arbeitsspindel und Werkzeugmagazin in letzterem abzulegen.

Daher ist es bevorzugt, wenn der in das Werkzeugmagazin zurückgelegte, das Reststück haltende Spindelgreifer von dem Werkzeugmagazin von der Übergabeposition zu einer Entladestation gefahren wird, in der der Spindelgreifer das Reststück frei gibt.

Allgemein ist es bevorzugt, wenn der Spindelgreifer durch eine Schließfeder in seine Greifstellung oder - wie im Fall einer Schale - in seine Schließstellung vorgespannt ist, in der er ein aufgenommenes Reststück verliersicher hält.

Hier ist von Vorteil, dass zum Ergreifen und Halten eines Werkstückes kein Medienanschluss an der Arbeitsspindel erforderlich ist, obwohl er Vorteile bei der Handhabung bieten kann. Der Spindelgreifer kann so ausgelegt sein, dass er sozusagen von der Arbeitsspindel auf das Reststück aufgeschoben werden kann, wobei sich seine Greiferbacken zunächst spreizen und über die Oberfläche des Reststücks gleiten, bis sie das Reststück hintergreifen oder in Ausnehmungen in dem Reststück eingreifen. In diese Greifstellung ist der Spindelgreifer dann durch die Schließfeder vorgespannt. In der Entladestation ist dann eine Vorrichtung vorgesehen, um die Greiferbacken des Spindelgreifers wieder zu öffnen.

Dazu kann der Spindelgreifer einen mechanisch betätigbaren Freigabebolzen aufweisen, bei dessen Betätigung der Spindelgreifer gegen die Kraft der Schließfeder in seine Freigabestellung überführt werden, wobei der Entladestation ein Betätigungsglied zugeordnet ist, das bei in der Entladestation befindlichem Spindelgreifer zur Betätigung des Freigabebolzens dient.

Hier ist von Vorteil, dass der Spindelgreifer keine Medienanschlüsse benötigt, das Ergreifen und Halten eines Reststückes bewirkt allein die Schließfeder, während in der Entladestation das Freigeben durch Betätigung des Freigabebolzens erfolgt. Das ermöglicht eine einfachen Aufbau und die problemlose Nachrüstung bestehender Werkzeugmaschinen.

Weiter ist es bevorzugt, wenn der Spindelgreifer einen ersten Medienanschluss aufweist, der an eine der Arbeitsspindel zugeordnete erste Medienversorgung anschließbar ist, und wenn bei Beaufschlagung des ersten Medienanschlusses mit einem Medium aus der ersten Medienversorgung der Spindelgreifer zwischen seiner Greifstellung und seiner Freigabestellung überführt wird, wobei weiter vorzugsweise beim Einspannen des Spindelgreifers in die Arbeitsspindel der erste Medienanschluss automatisch an die erste Medienversorgung angeschlossen wird.

Der in die Arbeitsspindel eingespannte Spindelgreifer kann so beispielsweise gegen die Kraft einer Schließfeder aktiv geöffnet werden, die nach dem Aufschieben auf das Reststück den Greifer dann in seine Greifstellung schließt.

Wenn der Spindelgreifer zwischen seinen Greiferbacken ein in Greifstellung selbstsperrendes oder verriegelndes Getriebe aufweist, kann er über den Medienanschluss aktiv geschlossen werden.

Hier ist von Vorteil, dass der Spindelgreifer auf sichere Weise geöffnet und/oder geschlossen wird, wobei die üblichen Medien verwendet werden können, die in einer Arbeitsspindel zur Verfügung stehen also Druckluft, Kühlschmiermittel, elektrischer Strom oder Hydrauliköl.

Dabei ist es bevorzugt, wenn der Spindelgreifer einen zweiten Medienanschluss aufweist, der an eine dem Werkzeugmagazin zugeordnete zweite Medienversorgung anschließbar ist, und wenn bei Beaufschlagung des zweiten Medienanschlusses mit einem Medium aus der zweiten Medienversorgung der Spindelgreifer von seiner Greifstellung in seine Freigabestellung überführt wird, wobei vorzugsweise bei in der Entladestation befindlichem Spindelgreifer der zweite Medienanschluss vorzugsweise automatisch mit der zweiten Medienversorgung verbunden wird. Besonders bevorzugt ist es, wenn der zweite Medienanschluss der erste Medienanschluss ist.

Hier ist von Vorteil, dass der zum Ergreifen des Reststückes verwendete Öffnungsmechanismus, der beispielsweise gegen die Kraft der Schließfeder arbeitet, analog auch in der Entladestation verwendet werden kann. Das führt zu einem einfach aufgebauten Spindelgreifer.

Schließlich ist es bevorzugt, wenn der Spindelgreifer ein selbstsperrendes oder hemmendes Getriebe, das zwischen zwei Greiferbacken wirkt, einen ersten Medienanschluss, der an eine der Arbeitsspindel zugeordnete erste Medienversorgung anschließbar ist, und einen zweiten Medienanschluss aufweist, der an eine an der Entladestation vorgesehene zweite Medienversorgung anschließbar ist, dass bei Beaufschlagung des ersten Medienanschlusses mit einem Medium aus der ersten Medienversorgung der Spindelgreifer in seine Greifstellung überführt wird, und dass bei Beaufschlagung des zweiten Medienanschlusses mit einem Medium aus der zweiten Medienversorgung der Spindelgreifer in seine Freigabestellung überführt wird.

Der Spindelgreifer kann also auch mit einem selbstsperrenden, -verriegelnden oder - hemmenden Getriebe ausgestattet sein, das zwischen zwei Greiferbacken wirkt, die über einen ersten Medienanschluss geschlossen und einen zweiten Medienanschluss geöffnet werden, ohne Medieneinwirkung aber in dem eingenommenen Zustand verbleiben.

Weitere Vorteile ergeben sich aus der Beschreibung und der beigefügten Zeichnung.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel einer Werkzeugmaschine, auf der das erfindungsgemäße Verfahren durchgeführt werden kann;
- Fig. 2: eine Darstellung wie Fig. 1, jedoch mit geschwenkter Spannvorrichtung;
- Fig. 3: ein weiteres Ausführungsbeispiel einer Werkzeugmaschine, auf der das erfindungsgemäße Verfahren durchgeführt werden kann, in schematischer Seitenansicht;
- Fig. 4: eine schematische Darstellung der Spannvorrichtung mit einem eingespannten Reststück;
- Fig. 5 bis 7: schematische, perspektivische Anschichten des Werkzeugmagazins, der Arbeitsspindel und der Spannvorrichtung aus Fig. 3, in unterschiedlichen Stadien der Entsorgung eines Reststücks;
- Fig. 8: eine schematische Seitenansicht eines Spindelgreifers in Greifstellung;
- Fig. 9: eine schematische Seitenansicht eines Spindelgreifers in Freigabestellung; und
- Fig. 10: in schematischer Darstellung das Zusammenwirken von Medienanschlüssen an einem Spindelgreifer und Medienversorgungen in der Arbeitsspindle und in dem Werkzeugmagazin.

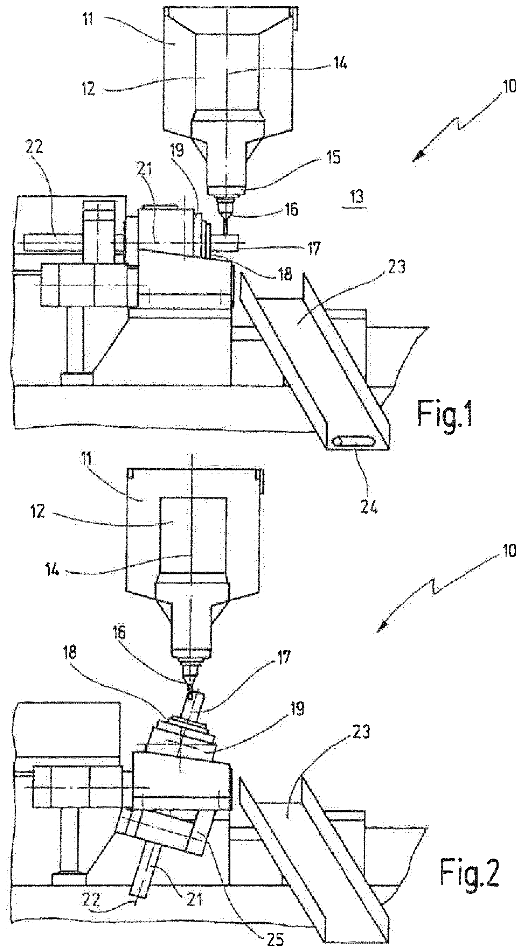

In Fig. 1 ist mit 10 eine Werkzeugmaschine bezeichnet, an deren Fahrständer 11 ein Spindelkopf 12 höhenverstellbar gelagert ist. Der Spindelkopf 12 kann auf diese Weise in einem Arbeitsraum 13 in allen drei Raumrichtungen verfahren werden.

Die Erfindung kann auch in einer Portal- oder Gantrymaschine realisiert werden. Es ist auch möglich, nur zwei Achsen in dem Spindelkopf 12 und die dritte in einer Spannvorrichtung für die Werkstücke zu realisieren.

Der Spindelkopf 12 trägt eine um eine Spindelachse 14 drehbar angetriebene Arbeitsspindel 15, in die auf übliche Weise unterschiedliche Werkzeuge 16 eingespannt werden können, um Werkstückabschnitte 17 zu bearbeiten, die in eine Spannvorrichtung 18 eingespannt sind.

Die Spannvorrichtung 18 ist mit Drehantrieb 19 verbunden, um die Werkstückabschnitte 17 um eine Drehachse 21 zu verdrehen, so dass die Werkstückabschnitte 17 an ihren vier Längsseiten bearbeitet werden können. Es ist auch möglich, die Werkstückabschnitte 17 mit Hilfe des Drehantriebes so in Rotation zu versetzen, dass eine Drehbearbeitung möglich ist, wobei dann in die stehende Arbeitsspindel 15 ein für Drehbearbeitung geeignetes Werkzeug 16 eingesetzt ist. Auf diese Weise ist die Werkzeugmaschine 10 sowohl für Fräsbearbeitung als auch für Drehbearbeitung von Werkstückabschnitten 17 einsetzbar.

Die Werkstückabschnitte 17 werden nun von einer Werkstückstange 22 bearbeitet, die von hinten durch die Spannvorrichtung 18 durchgeschoben ist, so dass an ihrem vorderen Ende zumindest der Werkstückabschnitt 17 in den Arbeitsraum 13 übersteht und dort bearbeitet werden kann. Die Werkstückstange 22 kann dabei beliebige Querschnittformen aufweisen, an die die Spannvorrichtung 18 entsprechend angepasst ist.

Wenn ein Werkstückabschnitt 17 fertig bearbeitet ist, wird er durch ein geeignetes Werkzeug 16 oder auch eine gesondert vorgesehene Kappsäge von der Werkstückstange 22 abgetrennt und über eine Rutsche 23 aus dem Arbeitsraum 13 entfernt. In Fig. 1 ist unten auf der Rutsche ein fertig bearbeitetes Werkstück 24 angedeutet.

Um die Stirnseite des Werkstückabschnittes 17 bearbeiten zu können, ist die Spannvorrichtung 18 auf einem in Fig. 2 zu erkennenden Schwenkhalter 25 gelagert, durch den die Drehachse 21 so weit verschwenkt werden kann, bis sie nahezu mit der Spindelachse 14 fluchtet.

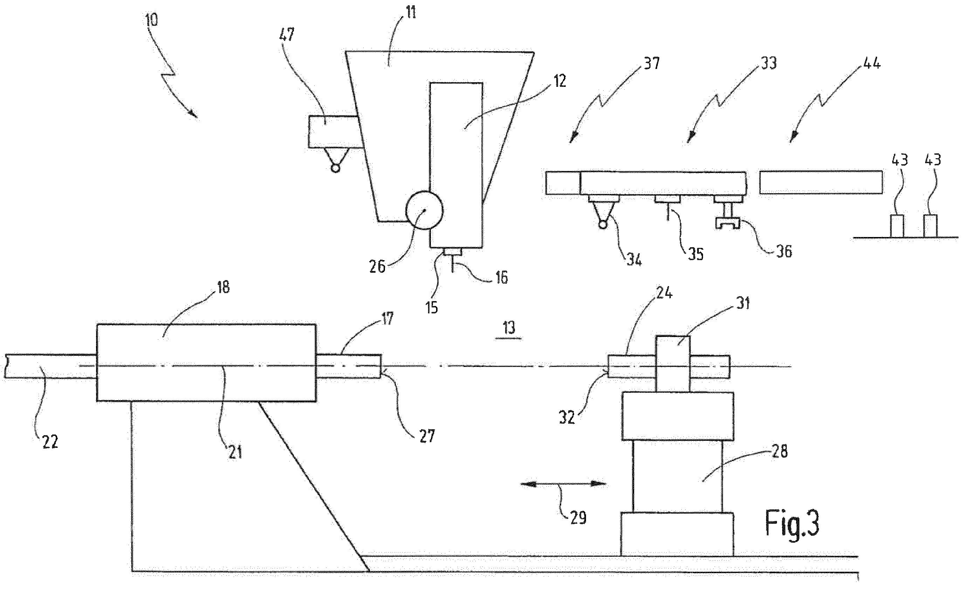

Alternativ oder zusätzlich zu der Spannvorrichtung 18 kann auch der Spindelkopf 12 schwenkbar ausgelegt sein, wie dies jetzt im Zusammenhang mit Fig. 3 erläutert wird.

Die Werkzeugmaschine 10 aus Fig. 3 ist ebenfalls nur schematisch dargestellt, sie umfasst wieder den Fahrständer 11 sowie den Spindelkopf 12, der jetzt um eine bei 26 angedeutete Drehachse in dem Arbeitsraum 13 verschwenkt werden kann, um den Werkstückabschnitt 17 an seiner Stirnseite 27 bearbeiten zu können.

Zusätzlich zu der Spannvorrichtung 18 ist bei der Werkzeugmaschine 10 eine Vorrichtung 28 vorgesehen, die in Richtung der Drehachse 21 verschiebbar ist, was durch einen Pfeil 29 angedeutet wird.

Die Vorrichtung 28 weist eine Klemmeinheit 31 auf, in die ein teilbearbeitetes Werkstück 24 eingespannt werden kann. Auf diese Weise ist der Werkstückabschnitt 17 auch an seiner jetzt von der restlichen Werkstückstange 22 abgetrennten, sechsten Seite 32 für eine Bearbeitung durch ein Bearbeitungswerkzeug 16 zugänglich.

Neben dem Fahrständer 11 ist ein schematisch angedeutetes Werkzeugmagazin 33 vorgesehen, in dem verschiedene Werkzeuge 34, 35 sowie ein selbsthaltender Spindelgreifer 36 vorrätig gehalten sind, die wahlweise in die Arbeitsspindel 15 eingesetzt werden können.

Dazu werden das betreffende Werkzeug 34, 35 oder der Spindelgreifer 36 in die in Fig. 3 mit 37 bezeichnete Übergabeposition gefahren. In Fig. 3 ist die Übergabeposition 37 nicht von einem Werkzeug 34, 35 besetzt, weil sich dort für die vorherige Ablage des in die Arbeitsspindel 15 eingespannten Werkzeuges 16 ein Leerplatz des Werkzeugmagazins 33 befindet.

Nachdem das Werkzeug 16 in dem Werkzeugmagazin 33 abgelegt wurde, fährt dieses ein neues Werkzeug 34, 35 in die Übergabeposition 37, wo es von der wartenden Arbeitsspindel 15 aufgenommen wird.

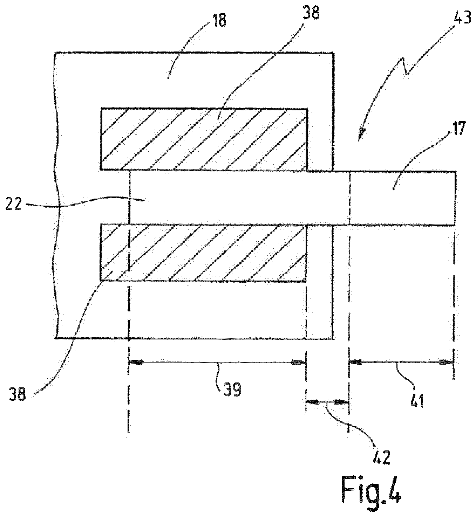

Mit den Werkzeugen 16, 34, 35 werden jetzt von einer Werkstückstange 22 nacheinander Werkstückabschnitte 17 bearbeitet und abgetrennt, so dass die restliche Werkstückstange 22 immer kürzer wird. Diese Einspannsituation in die Spannvorrichtung 18 ist in Fig. 4 schematisch gezeigt.

Das restliche Werkstückstange 22 wird durch beispielsweise zwei Spannbacken 38 gehalten, in denen es mit seinem hinteren Abschnitt mit einer Mindest-Spannlänge gehalten ist, die bei 39 angedeutet ist. Würde die Werkstückstange 22 mit einem kürzeren Abschnitt in den Spannbacken 38 sitzen, würde sie nicht mehr hinreichend sicher gehalten.

Die gesamte Länge der restlichen Werkstückstange 22 setzt sich aus dieser Mindest-Spannlänge 39, der bei 41 angedeuteten Länge des in den Arbeitsraum über die Spannvorrichtung 18 überstehender Werkstückabschnittes 17 sowie einem Überstand 42 zusammen, um den der Werkstückabschnitt 43 über die Spannbacken 38 vorstehen muss, um im Arbeitsraum 13 sicher bearbeitet werden zu können.

Wenn die Länge 41 des Werkstückabschnittes 17 kürzer ist als die Länge eines zu fertigenden Werkstückes 24, wird die restliche Werkstückstange 22 als Reststück 43 entsorgt.

Dazu wird die Arbeitsspindel 15 in ihre Übergabeposition 37 zu dem Werkzeugmagazin 33 gefahren, wo sie das aktuell gehaltene Werkzeug 16, 34, 35 ablegt, woraufhin das Werkzeugmagazin 33 dann den selbsthaltenden Spindelgreifer 36 in die Übergabeposition 37 verfährt hat, der dort im Pick-up-Verfahren in die Arbeitsspindel 15 eingespannt wird. Die Arbeitsspindel 15 fährt dann die Spannvorrichtung 18 so an, dass der Spindelgreifer 36 das Reststück 43 ergreifen kann, das dann von der Spannvorrichtung 18 freigegeben wird.

Die Arbeitsspindel 15 fährt dann in die Übergabeposition 37 zurück und legt den das Reststück 43 haltenden Spindelgreifer 36 wieder in dem Werkzeugmagazin 33 ab. Der Spindelgreifer 36 wird dann in dem Werkzeugmagazin 33 in zu einer bei 44 in Fig. 3 angedeuteten Entladestation gefahren, wo das Reststück 43 abgelegt wird.

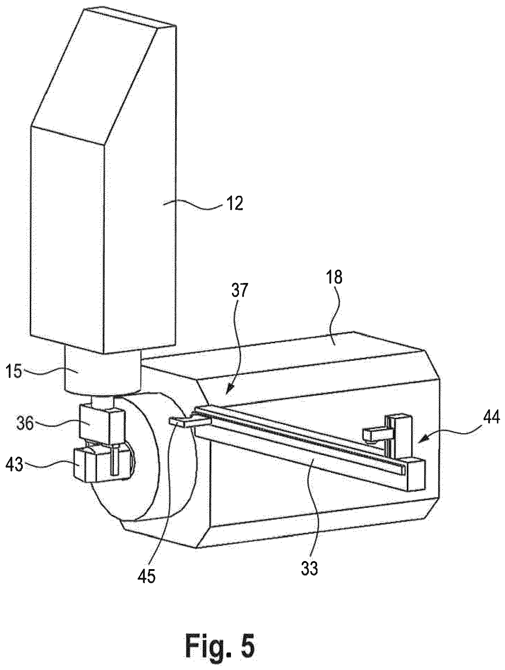

Dieser Vorgang wird jetzt anhand der Fig. 5 bis 7 im Detail erläutert, die perspektivische, schematische Anschichten des Werkzeugmagazins 33, der Arbeitsspindel 15 und der Spannvorrichtung 18 in unterschiedlichen Stadien der Entsorgung eines Reststücks 43 zeigen.

In dem Verfahrensstadium der Fig. 5 befindet sich der Spindelgreifer 36 in der Arbeitsspindel 15, wobei das Reststück 43 noch in der Spannvorrichtung 18 gehalten ist. Der Spindelgreifer 36 hat das Reststück 43 bereits ergriffen, das jetzt von der Spannvorrichtung 18 freigegeben wird. Der Spindelkopf 12 fährt jetzt die Arbeitsspindel 15 in die Übergabeposition 37 an dem Werkzeugmagazin 33, das in den Fig. 5 bis 7 lediglich schematisch als lineare Transportstraße angedeutet ist.

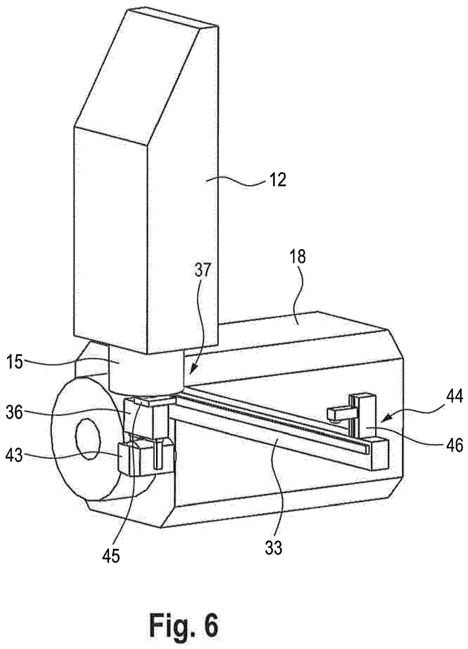

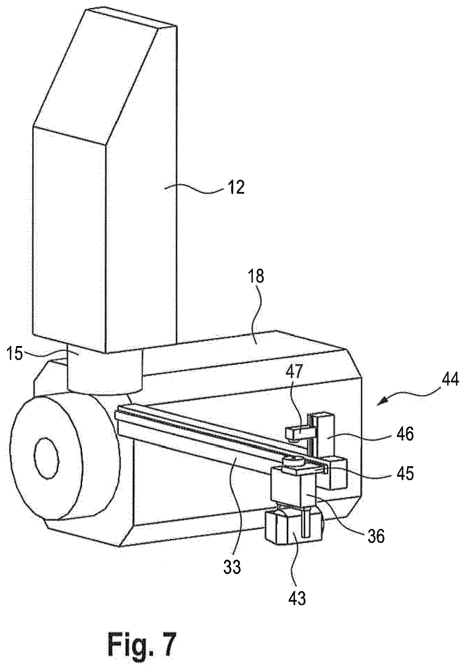

In der Übergabeposition 37 hält das Werkzeugmagazin 33 einen leeren Halter 45 bereit, in den der das Reststück 43 haltende Spindelgreifer 36 jetzt abgelegt wird, wie es Fig. 6 zeigt. Der Halter 45 wird dann von dem Werkzeugmagazin 33 in die Entladestation 44 verfahren, wie es Fig. 7 zeigt.

In der Entladestation 44 ist eine Löseeinheit 46 vorgesehen, die einen höhenverstellbaren Arm 47 aufweist, der jetzt von oben auf den Spindelgreifer 36 aufgesetzt wird, um das gehaltene Reststück 37 freizugeben.

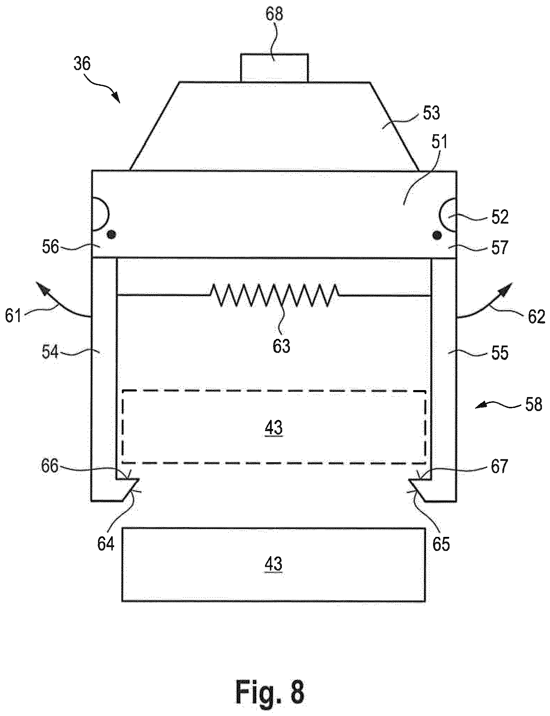

Fig. 8 zeigt in schematischer Seitenansicht ein erstes Ausführungsbeispiel des Spindelgreifers 36, der eine für Werkzeughalter übliche Greiferplatte 51 mit umlaufender Nut 52 aufweist, an der der Spindelgreifer 36 in an sich beispielsweise für SK- oder HSK-Werkzeughalter bekannter Weise von dem Halter 45 gehalten wird.

Oben auf der Greiferplatte 51 sitzt ein Haltekegel 53, mit dem der Spindelgreifer 36 wie beispielsweise SK- oder HSK-Werkzeughalter in eine Werkzeugaufnahme in der Stirnseite der Arbeitsspindle 15 eingesetzt und verspannt wird.

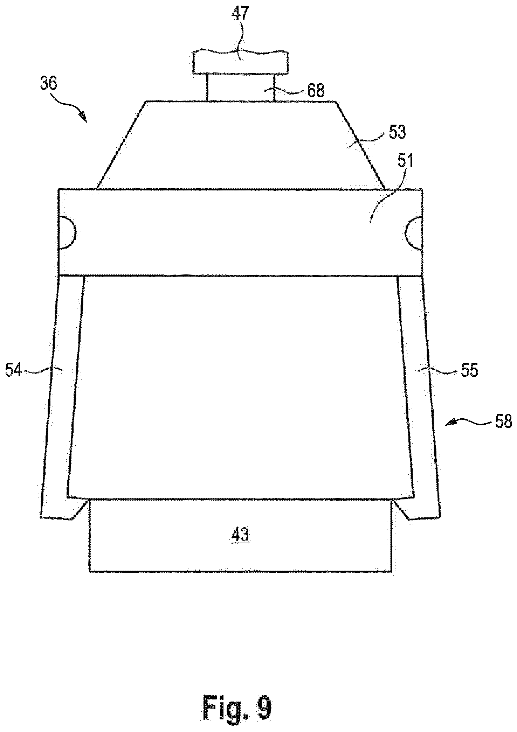

Unten an der Greiferplatte 51 sind zwei Greiferbacken 54, 55 angeordnet, die um Achsen 56, 57 zwischen der in Fig. 8 gezeigten Greifstellung 58 und der in Fig. 9 gezeigten Freigabestellung 59 verschwenkbar sind, was durch Pfeile 61, 62 angedeutet ist. Die Greiferbacken 54, 55 sind durch eine bei 63 angedeutete Schließfeder in ihre Greifstellung 58 vorgespannt.

Unten an den freien Enden der Greiferbacken 54, 55 sind abgeschrägte Flächen 64, 65 ausgebildet, die beim Aufschieben das Spindelgreifers 36 auf ein Reststück 43 an diesem entlanggleiten und die Greiferbacken 54, 55 nach außen drücken, so dass sie in die Freigabestellung 59 schwenken und das Reststück 43 zwischen sich hindurchlassen.

Wenn das Reststück 43 die Flächen 64, 65 wieder freigibt, schwenken die Greiferbacken 54, 55 in ihre Greifstellung 58 zurück, in der das in Fig. 8 gestrichelt dargestellte Reststück sicher auf Planflächen 66, 67 der Greiferbacken 54, 55 gehalten ist.

Auf diese Weise erfasst ein in die Arbeitsspindel 15 eingespannter Spindelgreifer 36 ein in der Spannvorrichtung 18 eingespanntes Reststück 43.

Oben auf dem Haltekegel 53 ist ein Freigabebolzen 68 zu erkennen, der bei in der Entladestation 44 befindlichem Spindelgreifer 36 durch den Arm 47 der Löseeinheit 46 betätigt wird, wodurch die Greiferbacken 54, 55 in ihre Freigabestellung 59 schwenken und das Reststück 43 freigeben.

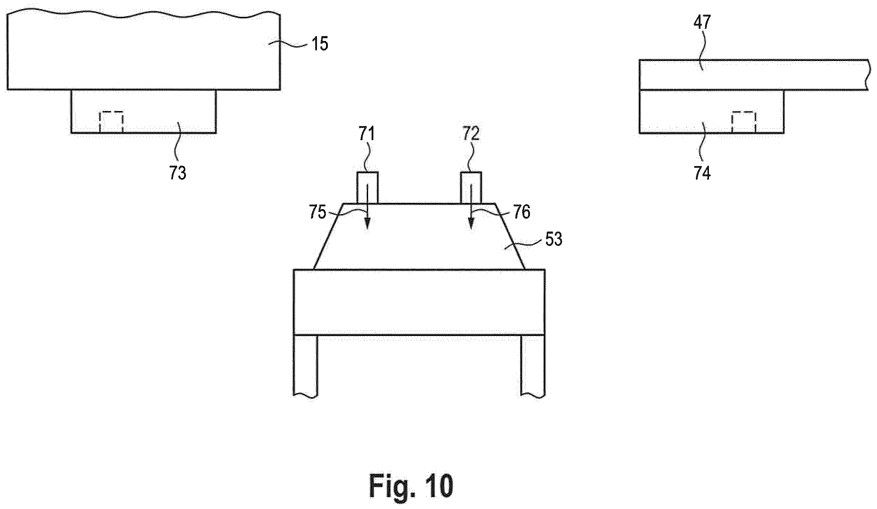

Alternativ kann der Spindelgreifer 36 auf dem Haltekegel 53 auch zwei Medienanschlüsse 71, 72 aufweisen, die automatisch mit einer Medienversorgung 73 in der Arbeitsspindel 15 bzw. einer Medienversorgung 74 in dem Arm 47 in Eingriff gelangen, wenn der Spindelgreifer 36 in die Arbeitsspindel 15 eingespannt bzw. in die Entladestation 44 verfahren und der Arm 47 abgesenkt wird, wie dies schematisch in Fig. 10 dargestellt wird.

Diese Ausgestaltung kann gewählt werden, wenn der Spindelgreifer 36 keine Schließfeder 63 sondern beispielsweise ein selbsthemmendes Getriebe zwischen den Greiferbacken 54, 55 aufweist, das die Greiferbacken 54, 55 in der einmal eingenommenen Greifstellung bzw. Freigabestellung hält.

Über in den Medienanschluss 71 geleitetes Medium 75 werden die Greiferbacken 54, 55 beispielsweise in ihre Greifstellung 58 und über in den Medienanschluss 72 geleitetes Medium 76 zurück in ihre Freigabestellung 59 verschwenkt.

Wenn eine Kombination von Schließfeder 63 und Medienanschluss 72 gewählt wird, ist nur der Medienanschluss 72 erforderlich, der die Greiferbacken 54, 55 in der Entladestation 44 und ggf. bei der Aufnahme eines Reststückes 43 aus der Spannvorrichtung 18 in die Freigabestellung 59 schwenkt, so dass auf die abgeschrägten Flächen 65, 66 verzichtet werden kann.

Die Anordnung der Schließfeder 63 zwischen den Greiferbacken 54, 55 und die Anordnung von Freigabebolzen 68 und Medienanschlüssen 71, 72 auf dem Haltekegel 53 ist übrigens lediglich beispielhaft zu verstehen, sie können auch neben dem Haltekegel 53 oben auf der Greiferplatte 51 oder an sonst geeigneter Stelle an dem Spindelgreifer 36 angeordnet sein, wichtig ist nur, dass sie für die Medienversorgungen 73, 74 zugänglich sind.

## Patentansprüche

1. Verfahren zum Bearbeiten von Werkstücken (22) auf einer Werkzeugmaschine (10) mit einer relativ zu einer Spannvorrichtung (18) für die Werkstücke (22) verfahrbaren Arbeitsspindel (15), in die aus einem Werkzeugmagazin (33) Werkzeuge (16, 34, 35) zur Bearbeitung der Werkstücke (22) einspannbar sind, mit den Schritten:
a) Einspannen eines Werkstückes (22) in die Spannvorrichtung (18) derart, dass zumindest ein zu bearbeitender Werkstückabschnitt (17) des Werkstückes (22) über die Spannvorrichtung (18) übersteht,
b) Bearbeiten des Werkstückabschnittes (17) mit zumindest einem in die Arbeitsspindel (15) eingespannten Werkzeug (16, 34, 35),
c) Abtrennen des bearbeiteten Werkstückabschnitts (17) von dem in der Spannvorrichtung (18) verbleibenden restlichen Werkstück (22), und
f) Entsorgen des in der Spannvorrichtung (18) verbleibenden restlichen Werkstücks (22) als Reststück (43),
**dadurch gekennzeichnet, dass** Schritt f) die folgenden Schritte umfasst:
g) Einspannen eines in seiner Greifstellung (58) selbsthaltenden Spindelgreifers (36) in die Arbeitsspindel (15),
h) Verfahren der Arbeitsspindel (15) derart, dass der Spindelgreifer (36) das Reststück (43) ergreifen kann,
i) Ergreifen des Reststückes (43) mit dem Spindelgreifer (36),
k) Freigegeben des Reststückes (43) aus der Spannvorrichtung (18), und
l) Verfahren der Arbeitsspindel (15) und Ablegen des das Reststück (43) haltenden Spindelgreifers (36) zum nachfolgenden Entsorgen des Reststückes (43).

2. Verfahren nach Anspruch 1, **dadurch gekennzeichnet, dass** die Arbeitsspindel (15) in Schritt g) den Spindelgreifer (36) an einer Übergabeposition (37) aus dem Werkzeugmagazin (33) übernimmt, und in Schritt l) der das Reststück (43) haltende Spindelgreifer (36) an der Übergabeposition (37) in das Werkzeugmagazin (33) zurückgelegt wird.

3. Verfahren nach Anspruch 2, **dadurch gekennzeichnet, dass** der in das Werkzeugmagazin (33) zurückgelegte, das Reststück (43) haltende Spindelgreifer (36) von dem Werkzeugmagazin (33) von der Übergabeposition (37) zu einer Entladestation (44) gefahren wird, in der der Spindelgreifer (36) das Reststück (43) frei gibt.

4. Verfahren nach einem der Ansprüche 1 bis 3, **dadurch gekennzeichnet, dass** der Spindelgreifer (36) durch eine Schließfeder (63) in seine Greifstellung (58) oder Schließstellung vorgespannt ist, in der er ein aufgenommenes Reststück (43) verliersicher hält.

5. Verfahren nach einem der Ansprüche 1 bis 4, **dadurch gekennzeichnet, dass** der Spindelgreifer (36) einen ersten Medienanschluss (71) aufweist, der an eine der Arbeitsspindel (15) zugeordnete erste Medienversorgung (73) anschließbar ist, und dass bei Beaufschlagung des ersten Medienanschlusses (71) mit einem Medium (75) aus der ersten Medienversorgung (73) der Spindelgreifer (36) zwischen seiner Greifstellung (58) und seiner Freigabestellung (59) überführt wird.

6. Verfahren nach Anspruch 5, **dadurch gekennzeichnet, dass** beim Einspannen des Spindelgreifers (36) in die Arbeitsspindel (15) der erste Medienanschluss (71) automatisch an die erste Medienversorgung (73) angeschlossen wird.

7. Verfahren nach einem der Ansprüche 4 bis 6, **dadurch gekennzeichnet, dass** der Spindelgreifer (36) einen zweiten Medienanschluss (72) aufweist, der an eine dem Werkzeugmagazin (33) zugeordnete zweite Medienversorgung (74) anschließbar ist, und dass bei Beaufschlagung des zweiten Medienanschlusses (72) mit einem Medium (76) aus der zweiten Medienversorgung (74) der Spindelgreifer (36) von einer Greifstellung (58) in seine Freigabestellung (59) überführt wird.

8. Verfahren nach Anspruch 7, **dadurch gekennzeichnet, dass** bei in der Entladestation (44) befindlichem Spindelgreifer (36) der zweite Medienanschluss (72) vorzugsweise automatisch mit der zweiten Medienversorgung (74) verbunden wird.

9. Verfahren nach einem der Ansprüche 5 bis 8, **dadurch gekennzeichnet, dass** der zweite Medienanschluss (72) der erste Medienanschluss (71) ist.

10. Verfahren nach einem der Ansprüche 1 bis 9, **dadurch gekennzeichnet, dass** das Werkstück eine Werkstückstange (22) ist, und dass zwischen den Schritten c) und f) die folgenden Schritte durchgeführt werden:
d) Vorschieben der restlichen Werkstückstange (22), bis zumindest ein neuer Werkstückabschnitt (17) über die Spannvorrichtung (18) übersteht, und erneutes Einspannen der restlichen Werkstückstange (22),
e) Wiederholen der Schritte b) bis d), bis eine für die weitere Bearbeitung ungeeignete restliche Werkstückstückstange (22) entsteht, die dann in Schritt f) als Reststück (43) entsorgt wird.

11. Werkzeugmaschine mit einer Spannvorrichtung (18) zum Einspannen von zu bearbeitenden Werkstücken (22), einer relativ zu der Spannvorrichtung (18) verfahrbaren Arbeitsspindel (15), und einem Werkzeugmagazin (33), in dem Werkzeuge (16, 334, 35) für die Bearbeitung der Werkstücke (22) vorrätig gehalten werden, wobei die Werkzeuge (16, 34, 35) wahlweise in die Arbeitsspindel (15) einspannbar sind,
**dadurch gekennzeichnet, dass** in dem Werkzeugmagazin (33) ein wahlweise in die Arbeitsspindel (15) einspannbarer, in seiner Greifstellung (58) selbsthaltender Spindelgreifer (36) vorrätig gehalten wird, der zwischen einer Übergabeposition (37) zu der Arbeitsspindel (15) und einer Entladestation (44) verfahrbar ist, in der der Spindelgreifer (36) ein aus der Spannvorrichtung (18) aufgenommenes Reststück (43) frei geben kann.

12. Werkzeugmaschine nach Anspruch 11, **dadurch gekennzeichnet, dass** in dem Werkzeugmagazin (33) eine Entladestation (44) vorgesehen ist, in der der das Reststück (43) haltende Spindelgreifer (36) das Reststück (43) frei geben kann, wenn er von dem Werkzeugmagazin (33) von der Übergabeposition (37) zu der Entladestation (44) gefahren wurde.

## Claims

1. Method for machining workpieces (22) on a machine tool (10) having a work spindle (15), which is movable relative to a clamping device (18) for the workpieces (22) and into which tools (16, 34, 35) for machining the workpieces (22) can be clamped from a tool magazine (33), the method comprising the following steps:
a) clamping a workpiece (22) into the clamping device (18) in such a way that at least a workpiece portion (17) of the workpiece (22) that is to be machined projects beyond the clamping device (18),
b) machining the workpiece portion (17) with at least one tool (16, 34, 35) that is clamped into the work spindle (15),
c) separating the machined workpiece portion (17) from the residual workpiece (22) remaining in the clamping device (18), and
f) disposing of the residual workpiece (22) remaining in the clamping device (18) as a remnant (43),
**characterized in that** step f) comprises the following steps:
g) clamping a spindle gripper (36), which is self-holding in its gripping position (58), into the work spindle (15),
h) moving the work spindle (15) in such a way that the spindle gripper (36) can grip the remnant (43),
i) gripping the remnant (43) by the spindle gripper (36),
k) releasing the remnant (43) from the clamping device (18), and
I) moving the work spindle (15) and depositing the spindle gripper (36) holding the remnant (43) for the subsequent disposal of the remnant (43).

2. Method according to Claim 1, **characterized in that**, in step g), the work spindle (15) takes the spindle gripper (36) out off the tool magazine (33) at a transfer position (37) and, in step I), the spindle gripper (36) holding the remnant (43) is returned into the tool magazine (33) at the transfer position (37).

3. Method according to Claim 2, **characterized in that** the spindle gripper (36) returned into the tool magazine (33) and holding the remnant (43) is moved by the tool magazine (33) from the transfer position (37) to an unloading station (44) in which the spindle gripper (36) releases the remnant (43).

4. Method according to any one of Claims 1 to 3, **characterized in that** the spindle gripper (36) is prestressed by a closing spring (63) into its gripping position (58) or closing position in which it holds a received remnant (43) in a loss-proof manner.

5. Method according to any one of Claims 1 to 4, **characterized in that** the spindle gripper (36) has a first media connection (71) to which a first media supply (73), associated with the work spindle (15), can be connected, and **in that**, when the first media connection (71) is supplied with a medium (75) from the first media supply (73), the spindle gripper (36) is transferred between its gripping position (58) and its release position (59).

6. Method according to Claim 5, **characterized in that**, when the spindle gripper (36) is clamped into the work spindle (15), the first media connection (71) is automatically connected to the first media supply (73).

7. Method according to any one of Claims 4 to 6, **characterized in that** the spindle gripper (36) has a second media connection (72) to which a second media supply (74), which is associated with the tool magazine (33), can be connected, and **in that**, when the second media connection (72) is supplied with a medium (76) from the second media supply (74), the spindle gripper (36) is transferred from its gripping position (58) into its release position (59).

8. Method according to Claim 7, **characterized in that**, with the spindle gripper (36) being in the unloading station (44), the second media connection (72) is preferably automatically connected to the second media supply (74).

9. Method according to any one of Claims 5 to 8, **characterized in that** the second media connection (72) is the first media connection (71).

10. Method according to any one of Claims 1 to 9, **characterized in that** the workpiece is a workpiece bar (22), and **in that** the following steps are carried out between the steps c) and f):
d) advancing the residual workpiece bar (22) until at least a new workpiece portion (17) projects beyond the clamping device (18), and again clamping in the residual workpiece bar (22),
e) repeating the steps b) to d) until a residual workpiece bar (22) results which is unsuitable for further machining and which is then disposed of as a remnant (43) in step f).

11. Machine tool having a clamping device (18) for clamping in workpieces (22) to be machined, a work spindle (15) which can be moved relative to the clamping device (18), and a tool magazine (33) in which tools (16, 334, 35) for machining the workpieces (22) are held available, wherein the tools (16, 34, 35) can be selectively clamped into the work spindle (15),
**characterized in that** a spindle gripper (36) which can be selectively clamped into the work spindle (15) and which is self-holding in its gripping position (58) is held available in the tool magazine (33) and can be moved between a transfer position (37) to the work spindle (15) and an unloading station (44) in which the spindle gripper (36) can release a remnant (43) received from the clamping device (18).

12. Machine tool according to Claim 11, **characterized in that** the tool magazine (33) has provided therein an unloading station (44) in which the spindle gripper (36) holding the remnant (43) can release the remnant (43) if said gripper has been moved by the tool magazine (33) from the transfer position (37) to the unloading station (44).

## Revendications

1. Procédé d'usinage de pièces (22) sur une machine-outil (10) comprenant une broche de travail (15) qui peut être déplacée par rapport à un dispositif de serrage (18) pour les pièces (22) et dans laquelle peuvent être serrés des outils (16, 34, 35) provenant d'un magasin à outils (33) servant à l'usinage des pièces (22), comprenant les étapes suivantes:
a) serrage d'une pièce (22) dans le dispositif de serrage (18) de telle sorte qu'au moins une portion de pièce (17) à usiner de la pièce (22) fait saillie au-dessus du dispositif de serrage (18),
b) usinage de la portion de pièce (17) avec au moins un outil (16, 34, 35) serré dans la broche de travail (15),
c) séparation de la portion de pièce (17) usinée du reste de la pièce (22) qui reste dans le dispositif de serrage (18), et
f) mise au rebut du reste de la pièce (22) qui reste dans le dispositif de serrage (18) en tant que chute (43),
**caractérisé en ce que** l'étape f) comprend les étapes suivantes:
g) serrage, dans la broche de travail (15), d'un élément de préhension de broche (36) auto-maintenu dans sa position de préhension (58),
h) déplacement de la broche de travail (15) de telle sorte que l'élément de préhension de broche (36) peut saisir la chute (43),
i) saisie de la chute (43) avec l'élément de préhension de broche (36),
k) libération de la chute (43) hors du dispositif de serrage (18), et
l) déplacement de la broche de travail (15) et dépose de l'élément de préhension de broche (36) qui maintient la chute (43) en vue d'une mise au rebut postérieure de la chute (43).

2. Procédé selon la revendication 1, **caractérisé en ce qu'**à l'étape g), la broche de travail (15) prend en charge l'élément de préhension de broche (36) hors du magasin à outils (33) au niveau d'une position de transfert (37) et, à l'étape I), l'élément de préhension de broche (36) qui maintient la chute (43) est ramené à la position de transfert (37) dans le magasin à outils (33).

3. Procédé selon la revendication 2, **caractérisé en ce que** l'élément de préhension de broche (36) qui maintient la chute (43), ramené dans le magasin à outils (33), est déplacé par le magasin à outils (33) de la position de transfert (37) à une station de déchargement (44) dans laquelle l'élément de préhension de broche (36) libère la chute (43).

4. Procédé selon l'une des revendications 1 à 3, **caractérisé en ce que** l'élément de préhension de broche (36) est précontraint par un ressort de fermeture (63) dans sa position de préhension (58) ou position de fermeture, dans laquelle il maintient de manière imperdable une chute (43) prise en charge.

5. Procédé selon l'une des revendications 1 à 4, **caractérisé en ce que** l'élément de préhension de broche (36) possède un premier raccord à fluide (71) qui peut être raccordé à une première alimentation en fluide (73) associée à la broche de travail (15), et **en ce que** lorsque le premier raccord à fluide (71) est alimenté avec un fluide (75) en provenance de la première alimentation en fluide (73), l'élément de préhension de broche (36) est transféré entre sa position de préhension (58) et sa position de libération (59).

6. Procédé selon la revendication 5, **caractérisé en ce que** lors du serrage de l'élément de préhension de broche (36) dans la broche de travail (15), le premier raccord à fluide (71) est automatiquement raccordé à la première alimentation en fluide (73).

7. Procédé selon l'une des revendications 4 à 6, **caractérisé en ce que** l'élément de préhension de broche (36) possède un deuxième raccord à fluide (72) qui peut être raccordé à une deuxième alimentation en fluide (74) associée au magasin à outils (33), et **en ce que** lorsque le deuxième raccord à fluide (72) est alimenté avec un fluide (76) en provenance de la deuxième alimentation en fluide (74), l'élément de préhension de broche (36) est transféré d'une position de préhension (58) dans sa position de libération (59).

8. Procédé selon la revendication 7, **caractérisé en ce que** lorsque l'élément de préhension de broche (36) se trouve dans la station de déchargement (44), le deuxième raccord à fluide (72) est de préférence relié automatiquement à la deuxième alimentation en fluide (74).

9. Procédé selon l'une des revendications 5 à 8, **caractérisé en ce que** le deuxième raccord à fluide (72) est le premier raccord à fluide (71).

10. Procédé selon l'une des revendications 1 à 9, **caractérisé en ce que** la pièce est une pièce en barre (22) et que les étapes suivantes sont exécutées entre les étapes c) et f):
d) coulissement vers l'avant de la pièce en barre (22) restante jusqu'à ce qu'au moins une nouvelle portion de pièce (17) fasse saillie au-dessus du dispositif de serrage (18) et nouveau serrage de la pièce en barre (22) restante,
e) répétition des étapes b) à d) jusqu'à ce qu'il se produise une pièce en barre (22) restante ne convenant pas à la poursuite de l'usinage, laquelle est ensuite éliminée en tant que chute (43) à l'étape f).

11. Machine-outil comprenant un dispositif de serrage (18) destiné à serrer des pièces (22) à usiner, une broche de travail (15) qui peut être déplacée par rapport au dispositif de serrage (18) et un magasin à outils (33) dans lequel sont tenus en réserve des outils (16, 334, 35) pour l'usinage des pièces (22), les outils (16, 34, 35) pouvant être serrés sélectivement dans la broche de travail (15),
**caractérisée en ce qu'**un élément de préhension de broche (36) auto-maintenu dans sa position de préhension (58), pouvant être serré sélectivement dans la broche de travail (15), est tenu en réserve dans le magasin à outils (33), lequel élément de préhension de broche peut être déplacé entre une position de transfert (37) vers la broche de travail (15) et une station de déchargement (44) dans laquelle l'élément de préhension de broche (36) peut libérer une chute (43) prise en charge depuis le dispositif de serrage (18).

12. Machine-outil selon la revendication 11, **caractérisée en ce qu'**une station de déchargement (44) se trouve dans le magasin à outils (33), dans laquelle l'élément de préhension de broche (36) qui maintient la chute (43) peut libérer la chute (43) lorsqu'il a été déplacé par le magasin à outils (33) de la position de transfert (37) à la station de déchargement (44).
